# EUROPEAN PATENT SPECIFICATION

(11) **EP 0 369 207 B1**
(45) Date of publication and mention of the grant of the patent: **14.07.1993**
(21) Application number: 89119636.2
(22) Date of filing: 23.10.1989
(51) Int. Cl.: B29C 51/10

(54) **Thermoforming of laminated structures**
Warmformen von Schichtstoffen
Moulage à chaud de matières stratifiées

(30) Priority: 14.11.1988 US 270992
(43) Date of publication of application: 23.05.1990
(73) Proprietor: GENERAL ELECTRIC COMPANY, Schenectady New York 12305 (US)
(72) Inventor: Lee, Walter J., Albany New York 12210 (US); Hissem, Catherine Sue, Pittsfield Massachusetts 01201 (US)
(74) Representative: Catherine, Alain

(56) References cited:
- DE-A- 1 946 051
- US-A- 3 446 686
- US-A- 4 087 224
- US-A- 4 230 764

## Description

This invention relates to thermoforming operations, and more particularly to the use of such operations to fabricate articles having laminated structures.

Thermoforming is a method of preparing articles from thermoplastics in which a sheet of the thermoplastic is heated until it is pliable, and is then formed to a mold by gaseous pressure. This pressure may be utilized in two ways, or combinations thereof: by exerting pressure on the sheet or film to cause it to conform to the mold, or by drawing a vacuum thereon from within or underneath the mold. The invention is specifically directed to the latter method, hereinafter designated "vacuum thermoforming". For an excellent review of thermoforming in a general sense, reference is made to the book Thermoforming by G. Gruenwald (Lancaster, PA: Technomic Publishing Co., Inc., 1987). US-A-4,230,764 discloses making articles by thermoforming two layers of sheet material, using both thermoplastic and thermosetting resins.

It is often advantageous to produce a molded article from three or more layers of sheet or film material. For example, ductile layers may be interleaved with more brittle ones for enhanced impact toughness, resin-rich surface layers may be provided to improve the article's appearance, or fiber-reinforced layers having different fiber orientations may be laminated to increase strength.

Vacuum thermoforming of such multilayer structures has presented problems, since only the lowermost layer is attracted to the mold under vacuum. This problem has typically been overcome by prelaminating the different layers into a single laminate in an upstream process, and thermoforming the prelaminated assemblage. However, the upstream prelaminating step is cumbersome.

The present invention provides a simple method for producing three or more layers vacuum thermoformed articles. Said method involves a minimum of processing steps and avoids the necessity of prelaminating operations.

The invention is a method for producing a thermoformed article which comprises the steps of:
feeding three or more layers of formable material to a heated mold, the layer outermost from the mold being non-perforated and the other layers being perforated;
vacuum forming said layers to the mold contours, thus producing a molded article; and
removing said molded article from the mold.

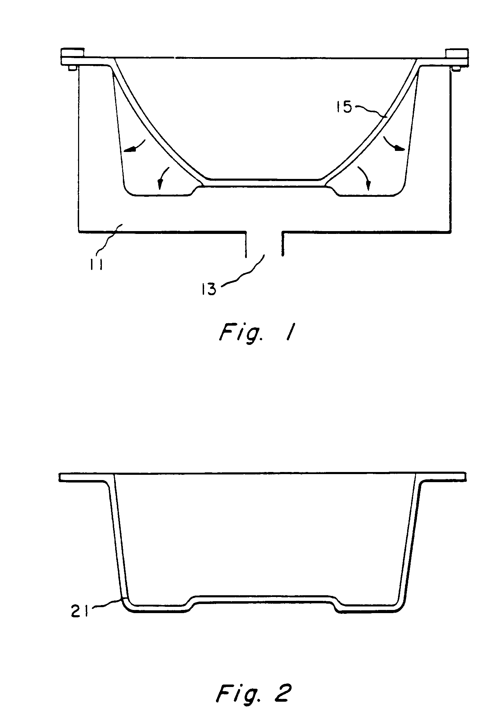

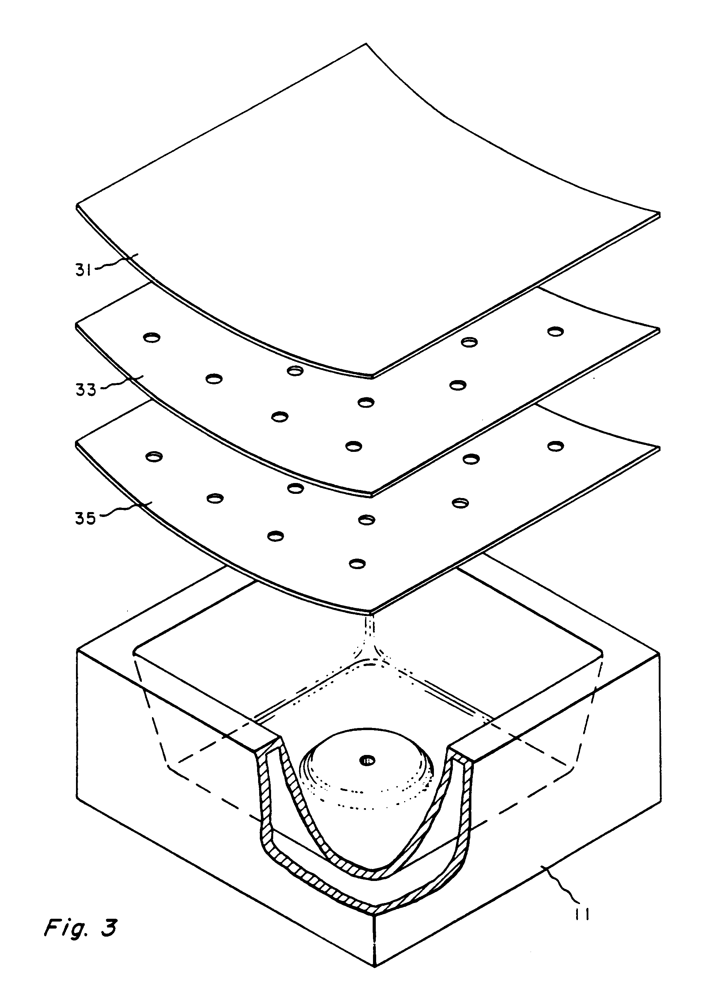

In the drawings, FIGURES 1-2 show successive conventional vacuum thermoforming steps. FIGURE 3 is a schematic view illustrating the relative positions of the thermoforming mold and multiple layers to be thermoformed, according to the invention.

The method of this invention is applicable to three or more layers of any thermoformable material. Included are thermoplastic resins of all types, illustrated by vinyl polymers, polyamides and polyesters. Both male and female molds may be employed. The method is especially applicable to three or more composite layers, each such layer comprising a fibrous substrate impregnated with thermoplastic resin.

In the first step of the method of this invention, three or more layers of formable materials as described hereinabove are fed to a heated mold. Where necessary, said layers may be preheated to render them flexible.

It is essential that the layer outermost from the mold be non-perforated. Thus, this layer may be a conventional thermoplastic sheet or film which forms part of the molded article. It is also contemplated to employ an outermost layer which does not participate in the structure of the article but merely serves as a diaphragm to create a seal during the vacuum thermoforming operation. Suitable diaphragms of this type are typically elastomeric in nature.

The layers between the outermost layer and the mold are perforated, to permit them to pass a vacuum which will attract the outermost layer. Perforations may be provided therein by any suitable means, including passage of said layers over a spiked roller or the like. The size of the perforations is not critical but may be determined by simple experimentation, so as to provide the necessary vacuum passage and also produce an article having the desired properties. Perforations with a cross section of 0.1-1.0 cm. are typical.

In the second step, the non-perforated and perforated layers are formed to the mold contours by vacuum action. This is typically achieved by drawing a vacuum from the opposite side of the mold, the mold being provided with suitable orifices so that the vacuum attracts the layers of formable material into uniform contact with the mold surface.

During the thermoforming operation, the mold is heated so as to maintain the multiple layers in their thermoplastic state, whereby they conform to the contours of the mold. When confirmation is adequate, the mold and its contents are cooled and the molded article is removed.

If imperviousness of the molded article to gases is desired, the period of molding should be adequate to cause the perforated layers to flow, sealing the perforations and converting the perforated layers into solid layers. Suitable residence times for the article in the mold can also be determined by simple experimentation.

Reference is now made to the drawings in which FIGURES 1-2 represent conventional thermoforming operations applied to multilayer structures. There is shown a hollow female mold 11, through which a vacuum is drawn via conduit 13. Multiple thermoplastic layers 15 are attracted by passage of the vacuum through suitable orifices (not shown) in the mold surface. After a suitable heating period, the article 21 having the contours of the mold is removed therefrom.

FIGURE 3 shows schematically the relative locations of the mold and the layers to be thermoformed, in accordance with the invention. Above mold 11 are three layers of formable material, although it is within the scope of the invention to use more layers. The outermost layer 31 is non-perforated and the other layers 33 and 35 are perforated. Thus, all layers are attracted by the vacuum drawn from within the mold and are made to adhere uniformly to the mold surface.

The invention is illustrated by a laboratory-scale molding operation involving three layers of poly(butylene terephthalate)-impregnated glass fiber cloth containing 30% (by weight) glass fiber, and an outermost layer of unfilled poly(butylene terephthalate). The filled layers were each perforated with a number of holes about 0.5 cm. in diameter.

The mold was preheated at 121°C and the layers were attracted thereto by vacuum action. All four layers were attracted and excellent fit in the mold was obtained. The mold was then cooled and the thermoformed article, having excellent appearance and integrity, was removed. The perforations were not noticeable, resin flow having been sufficient to fill them.

## Claims

1. A method for producing a thermoformed article which comprises the steps of:
feeding three or more layers of formable material to a heated mold, the layer outermost from the mold being non-perforated and the other layers being perforated;
vacuum forming said layers to the mold contours, thus producing a molded article; and
removing said molded article from the mold.

2. A method according to claim 1 wherein the mold is a female mold.

3. A method according to claim 2 wherein the non-perforated layer forms part of the molded article.

4. A method according to claim 3 wherein the formable material is a thermoplastic resin.

5. A method according to claim 4 wherein the resin is a polyester.

6. A method according to claim 5 wherein the polyester is poly(butylene terephthalate).

7. A method according to claim 2 wherein the non-perforated layer serves as a diaphragm to create a seal during the forming operation.

8. A method according to claim 5 wherein the formable material in the perforated layers is a thermoplastic resin.

9. A method according to claim 8 wherein the resin is a polyester.

10. A method according to claim 9 wherein the polyester is poly(butylene terephthalate).

## Patentansprüche

1. Verfahren zur Erzeugung eines warmgeformten Gegenstandes, welches die folgenden Schritte umfaßt:
Zuführung von 3 oder mehr Schichten eines formbaren Materials in eine erhitzte Form, wobei die Schicht, die am weitesten von der Form entfernt ist, nicht perforiert ist, und die anderen Schichten perforiert sind,
Vakuumverformung der Schichten auf die Konturen der Form zur Erzeugung des ausgeformten Gegenstandes, und
Entfernung des ausgeformten Gegenstandes aus der Form.

2. Verfahren nach Anspruch 1, bei dem die Form ein Negativ-Werkzeug ist.

3. Verfahren nach Anspruch 2, bei dem die nicht perforierte Schicht einen Teil des ausgeformten Gegenstandes bildet.

4. Verfahren nach Anspruch 3, worin das ausformbare Material ein thermoplastisches Harz ist.

5. Verfahren nach Anspruch 4, worin das Harz ein Polyester ist.

6. Verfahren nach Anspruch 5, worin der Polyester Poly(butylenterephthalat) ist.

7. Verfahren nach Anspruch 2, worin die nicht perforierte Schicht als Diaphragma dient, um während der Ausformoperation eine Abdichtung zu erzeugen.

8. Verfahren nach Anspruch 5, worin das ausformbare Material in den perforierten Schichten ein thermoplastisches Harz ist.

9. Verfahren nach Anspruch 8, worin das Harz ein Polyester ist.

10. Verfahren nach Anspruch 9, worin der Polyester Poy(butylenterephthalat) ist.

## Revendications

1. Procédé pour produire un article thermoformé comprenant les étapes consistant :
- à avancer trois ou plus de trois couches de matière formable jusqu'à un moule chauffé, la couche extérieure extrême par rapport au moule n'étant pas perforée et les autres couches étant perforées ;
- à mettre en forme par application de vide lesdites couches de manière qu'elles épousent les contours du moule en produisant ainsi un article moulé ; et
- à enlever du moule ledit article moulé.

2. Procédé selon la revendication 1, dans lequel le moule est un moule femelle.

3. Procédé selon la revendication 2, dans lequel la couche non perforée fait partie de l'article moulé.

4. Procédé selon la revendication 3, dans lequel la matière formable est une résine thermoplastique.

5. Procédé selon la revendication 4, dans lequel la résine est un polyester.

6. Procédé selon la revendication 5, dans lequel le polyester est du poly(téréphtalate de butylène).

7. Procédé selon la revendication 2, dans lequel la couche non perforée sert de membrane pour créer une étanchéité pendant l'opération de mise en forme.

8. Procédé selon la revendication 5, dans lequel la matière formable de la couche perforée est une résine thermoplastique.

9. Procédé selon la revendication 8, dans lequel la résine est un polyester.

10. Procédé selon la revendication 9, dans lequel le polyester est du poly(téréphtalate de butylène).
